# EUROPÄISCHE PATENTSCHRIFT

(11) **EP 3 916 334 B1**
(45) Veröffentlichungstag und Bekanntmachung des Hinweises auf die Patenterteilung: **09.10.2024**
(21) Anmeldenummer: 21174475.0
(22) Anmeldetag: 18.05.2021
(51) Int. Cl.: F28D 9/00, F28F 9/02, F28F 9/10

(54) **KÜHLEINRICHTUNG FÜR EINE KRAFTFAHRZEUGBATTERIE**
COOLING DEVICE FOR A MOTOR VEHICLE BATTERY
DISPOSITIF DE REFROIDISSEMENT POUR UNE BATTERIE DE VÉHICULE AUTOMOBILE

(30) Priorität: 27.05.2020 DE 102020114176
(43) Veröffentlichungstag der Anmeldung: 01.12.2021
(73) Patentinhaber: Dr. Ing. h.c. F. Porsche AG, 70435 Stuttgart (DE); MAN Truck & Bus SE, 80995 München (DE)
(72) Erfinder: STEINER, Oliver, 74251 Lehrensteinsfeld (DE); GROß, Manuel, 74394 Hessigheim (DE); SCHMIDT, Tim, 71691 Freiberg am Neckar (DE); GRASS, Dominik, 74321 Bietigheim-Bissingen (DE); EISELE, Marina, 74321 Bietigheim-Bissingen (DE); JALOWIETZKI, Jan, 70806 Kornwestheim (DE); KIGIN, Erdogan, 73760 Ostfildern (DE); STIMMING, Johannes, 31134 Hildesheim (DE)
(74) Vertreter: Sturm, Christoph

(56) Entgegenhaltungen:
- EP-B1- 2 625 721
- DE-B3- 102019 105 984
- FR-A1- 3 045 808
- US-A1- 2011 127 007

## Beschreibung

Die Erfindung betrifft eine Kühleinrichtung, mit deren Hilfe eine Kraftfahrzeugbatterie eines Kraftfahrzeugs gekühlt werden kann.

Aus EP 2 293 368 B1 ist eine Kühleinrichtung für eine Kraftfahrzeugbatterie bekannt, die eine mehrere parallele Kühlkanäle aufweisende Kühlplatte aufweist. An einer Stirnseite werden die als Vorlaufkanal verwendeten Kühlkanäle in einer Sammlerleiste mit einem Kühlmedium beaufschlagt, wobei an der entgegengesetzten Stirnseite das aus dem Vorlaufkanal kommende Kühlmedium in einer Umlenkleiste in einen benachbarten Rücklaufkanal umgelenkt wird. In der Sammlerleiste sind jeweils mit dem Vorlaufkanal und den Rücklaufkanal verschraubte Ventile vorgesehen, wobei die Sammlerleiste über horizontal ausgerichtete Schrauben mit einem Gehäuse der Kraftfahrzeugbatterie verschraubt ist.

DE 10 2019 105 984 B3 offenbart eine Kühleinrichtung für eine Kraftfahrzeugbatterie eines Kraftfahrzeugs nach dem Oberbegriff von Anspruch 1, mit einer Kühlplatte zum Kühlen der Kraftfahrzeugbatterie, wobei die Kühlplatte Vorlaufkanäle zur Zufuhr eines kalten Kühlmediums, zu den Vorlaufkanälen parallel verlaufende Rücklaufkanäle zur Abfuhr des erwärmten Kühlmediums und mindesten einen zu den Vorlaufkanälen und den Rücklaufkanälen parallel verlaufenen Leerkanal aufweist, mit einer an einer ersten Stirnstirnseite der Kühlplatte befestigten Umkehrsammlerleiste, mit einem in Längsrichtung des Leerkanals in den Leerkanal eingesteckten Befestigungsmittel zur Befestigung der Umkehrsammlerleiste.

Es besteht ein ständiges Bedürfnis die Herstellung einer kostengünstigen Kühleinrichtung für eine Kraftfahrzeugbatterie zu vereinfachen.

Es ist die Aufgabe der Erfindung Maßnahmen aufzuzeigen, die eine einfach herstellbare kostengünstige Kühleinrichtung für eine Kraftfahrzeugbatterie ermöglichen.

Die Lösung der Aufgabe erfolgt erfindungsgemäß durch eine Kühleinrichtung mit den Merkmalen des Anspruchs 1.

Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Ein Aspekt der Erfindung betrifft eine Kühleinrichtung für eine Kraftfahrzeugbatterie eines Kraftfahrzeugs, insbesondere elektrisch antreibbaren Kraftfahrzeugs, mit einer Kühlplatte zum Kühlen der Kraftfahrzeugbatterie, wobei die Kühlplatte Vorlaufkanäle zur Zufuhr eines kalten Kühlmediums, zu den Vorlaufkanälen parallel verlaufende Rücklaufkanäle zur Abfuhr des erwärmten Kühlmediums und mindesten einen zu den Vorlaufkanälen und den Rücklaufkanälen parallel verlaufenen Leerkanal aufweist, einer an einer ersten Stirnstirnseite der Kühlplatte befestigten Sammlerleiste zur Abdichtung von stirnseitigen Öffnungen der Vorlaufkanäle und der Rücklaufkanäle, einer in dem Leerkanal eingesetzten und in Längsrichtung des Leerkanals bewegungsfesten Befestigungsaufnahme und einem in Längsrichtung des Leerkanals in den Leerkanal eingesteckten und mit der Befestigungsaufnahme befestigten Befestigungsmittel, wobei die Sammlerleiste mit Hilfe des mit der Befestigungsaufnahme zusammenwirkenden Befestigungsmittels befestigt ist.

Durch die parallel zueinander verlaufenden Kanäle weist die Kühlplatte in Längsrichtung der Kanäle einen konstanten Querschnitt auf, der eine besonders einfache und kostengünstige Herstellung der Kühlplatte ermöglicht. Insbesondere ist die Kühlplatte durch Strangpressen hergestellt. Vorzugsweise ist die Kühlplatte aus einem Aluminiummaterial hergestellt. Dies ermöglicht es in der Kühlplatte zum Kühlen nicht benötigte Leerkanäle vorzusehen, beispielsweise um Materialkosten für die Kühlplatte sowie Gewicht einzusparen. Diese Leerkanäle können wiederum für eine Befestigungstechnik genutzt werden, mit deren Hilfe von der Kühlplatte verschiedene Bauteile der Kühleinrichtung und/oder weitere Bauteile mit der Kühlplatte befestigt werden können. Hierzu kann in den jeweiligen Leerkanal die Befestigungsaufnahme eingebracht und derart arretiert werden, dass das mit der Befestigungsaufnahme zusammenwirkende Befestigungsmittel eine ausreichend hohe Befestigungskraft aufbringen kann ohne dabei die Befestigungsaufnahme wegzureißen. Die Befestigungsaufnahme kann hierzu beispielsweise reibschlüssige in den Leerkanal eingepresst und/oder eingekrallt sein und/oder in dem Leerkanal formschlüssige zurückgehalten werden, indem die Befestigungsaufnahme in Richtung der Befestigungskraft des Befestigungsmittels an einem Anschlag formschlüssig anschlagen kann. Dadurch ist es prinzipiell möglich die Sammlerleiste stirnseitig mit der Kühlplatte zu befestigen, so dass es nicht erforderlich ist für ein Gehäuse der Kraftfahrzeugbatterie eine Befestigungstechnik vorzusehen. Das Gehäuse der Kraftfahrzeugbatterie kann dadurch eine geringere Materialdicke aufweisen. Zudem ist es möglich die Kraftfahrzeugbatterie einerseits und die Kühleinrichtung andererseits als unabhängig voneinander vormontierte Baueinheiten auszugestalten, die erst zu einem späteren Zeitpunkt miteinander verbunden werden. Die Funktionalisierung der insbesondere durch Strangpressen vorgesehene Leerkanäle für eine Befestigungstechnik mit anderen Bauteilen der Kühleinrichtung ermöglicht eine einfach herstellbare kostengünstige Kühleinrichtung für eine Kraftfahrzeugbatterie.

Erfindungsgemäß weisen die Vorlaufkanäle jeweils eine quer zur Längsrichtung des Vorlaufkanals verlaufende Zulauföffnung zur fluidischen Kommunikation mit einem an der Kühlplatte aufgesetzten Zulaufsammlerkanal und die Rücklaufkanäle jeweils eine quer zur Längsrichtung des Rücklaufkanals verlaufende Ablauföffnung zur fluidischen Kommunikation mit einem an der Kühlplatte aufgesetzten Ablaufsammlerkanal auf. Die Zulauföffnungen und die Ablauföffnungen sind insbesondere auf der gleichen Seite der Kühlplatte, insbesondere Oberseite oder Unterseite, vorgesehen. Alternativ können die Zulauföffnungen an der Oberseite und die Ablauföffnungen an der Unterseite oder die Zulauföffnungen an der Unterseite und die Ablauföffnungen an der Oberseite vorgesehen sein. Vorzugsweise sind die Zulauföffnungen und/oder die Ablauföffnungen jeweils in einer Linie angeordnet, so dass der Zulaufsammlerkanal als gerade verlaufender Kanal auf die Zulauföffnungen und/oder der Ablaufsammlerkanal als gerade verlaufender Kanal auf die Ablauföffnungen aufgesetzt werden kann. Die Oberseite beziehungsweise die Unterseite der Kühlplatte kann eine Kanalwand des Zulaufsammlerkanals beziehungsweise des Ablaufsammlerkanals ausbilden, so dass die Zulauföffnungen und die Ablauföffnungen leicht mit dem insbesondere einen U-förmigen Querschnitt aufweisenden jeweiligen Sammlerkanal kommunizieren können. Der Zulaufsammlerkanal und der Ablaufsammlerkanal können mit der Kühlplatte fluiddicht befestigt sein.

Insbesondere weist die Kühlplatte eine mit dem Leerkanal kommunizierende und quer zur Längsrichtung des Leerkanals verlaufende Halteöffnung zum in Längsrichtung des Leerkanals bewegungsfesten Einsetzen der Befestigungsaufnahme auf. Die Haltöffnung kann zu einer Oberseite und/oder zu einer Unterseite der Kühlplatte hin geöffnet sein. Die Befestigungsaufnahme weist insbesondere eine Erstreckung entlang der Halteöffnung auf, die größer als der Öffnungsquerschnitt des Leerkanals in dieser Richtung ist. Die Befestigungsaufnahme kann dadurch über den Öffnungsquerschnitt des Leerkanals hinausragen und an den Rand der Halteöffnung anschlagen, wenn das Befestigungsmittel mit einer in Längsrichtung des Leerkanals wirkenden Befestigungskraft mit der Befestigungsaufnahme zusammenwirkt. Die Befestigungsaufnahme ist dadurch formschlüssig in dem Leerkanal derart zurückgehalten, dass die Befestigungsaufnahme im Rahmen der vorgesehenen Toleranzen in Längsrichtung des Leerkanals bewegungsfest eingesetzt ist. Insbesondere ist die Befestigungsaufnahme vollständig in der Kühlplatte versenkt. Ein Herausragen aus der Halteöffnung, das zu einem Abstehen von der Kühlplatte führen würde, kann vermieden werden. Da in dem Leerkanal kein Kühlmedium gefördert wird, ist es nicht erforderlich eine fluiddichte Abdichte vorzusehen, so dass ein lockeres Einsetzen der Befestigungsaufnahme in die Haltöffnung mit Spiel zugelassen werden kann, wodurch die Montage vereinfacht ist.

Vorzugsweise weist die Befestigungsaufnahme ein in Längsrichtung des Leerkanals ausgerichtetes Innengewinde zum Einschrauben des Befestigungsmittels auf, wobei die Befestigungsaufnahme in der Halteöffnung drehfest eingesetzt ist oder die Befestigungsaufnahme in der Halteöffnung drehbar eingesetzt ist und eine über die Halteöffnung zugängliche Werkzeugkontur zum Verdrehen der Befestigungsaufnahme in der Halteöffnung aufweist. Die Außenkontur der Befestigungsaufnahme und der Halteöffnung kann eine von einer Kreisform verschiedene, insbesondere eckige, Konturierung aufweisen, so dass die Befestigungsaufnahme in einer definierten Relativdrehlage in die Halteöffnung eingesetzt werden kann, in der das Innengewinde der Befestigungsaufnahme bereits in Längsrichtung des Leerkanals ausgerichtet ist. Dadurch ist das Einfädeln des als Schraube ausgestalteten Befestigungsmittels in das Innengewinde der Befestigungsaufnahme vereinfacht. Alternativ kann die Außenkontur der Befestigungsaufnahme und der Halteöffnung ein Verdrehen zu lassen, insbesondere indem die Außenkonturen der Befestigungsaufnahme und der Halteöffnung kreisförmig ausgestaltet sind. Die Halteöffnung kann dadurch leicht durch Bohren erzeugt werden. Mit Hilfe der in diesem Fall vorgesehenen Werkzeugkontur, beispielsweise ein Schraubendreherschlitz, kann die Befestigungsaufnahme in eine geeignete Relativdrehlage zur Halteöffnung gedreht werden, bis das Innengewinde der Befestigungsaufnahme in Längsrichtung des Leerkanals ausgerichtet ist. Die Werkzeugkontur kann hierbei bei der Montage gut sichtbar sein und dadurch die korrekte Relativdrehlage anzeigen.

Insbesondere sind die Zulauföffnungen einerseits und die Ablauföffnungen andererseits in Längsrichtung zueinander versetzt angeordnet, wobei der Zulaufsammlerkanal und der Ablaufsammlerkanal in Längsrichtung zueinander versetzt ausgebildet sind, wobei insbesondere der Zulaufsammlerkanal und der Ablaufsammlerkanal einstückig ausgestaltet sind. Der Zulaufsammlerkanal und der Ablaufsammlerkanal können an der selber Seite der Kühlplatte nebeneinander im Wesentlichen parallel zueinander verlaufen. Der Zulaufsammlerkanal und der Ablaufsammlerkanal können durch ein gemeinsames einstückiges Bauteil ausgebildet werden, wobei insbesondere eine den Zulaufsammlerkanal und den Ablaufsammlerkanal voneinander trennende Trennwand vorgesehen ist, die an ihren unterschiedlichen Langseiten einen Teil des Zulaufsammlerkanal und einen Teil des Ablaufsammlerkanals ausbildet. Dies ermöglicht eine kostengünstige Anbindung der Vorlaufkanäle und der Rücklaufkanäle einen Kühlkreislauf, der insbesondere einen luftgekühlten Kühler zum Abkühlen des erwärmten Kühlmediums aufweist.

Vorzugsweise ist zwischen dem Zulaufsammlerkanal und der Kühlplatte ein um alle Zulauföffnungen gemeinsam herum verlaufender erster Dichtring und zwischen dem Ablaufsammlerkanal und der Kühlplatte ein um alle Ablauföffnungen gemeinsam herum verlaufender zweiter Dichtring vorgesehen, wobei insbesondere der erste Dichtring und der zweite Dichtring einstückig ausgeführt sind. Genau ein Ringkörper, in dessen Innenraum sämtlich Zulauföffnungen beziehungsweise sämtlich Ablauföffnungen vorgesehen sind, ist für eine gute Abdichtung ausreichend. Eine Leckage zwischen den Zulauföffnungen beziehungsweise eine Leckage zwischen den Ablauföffnungen kann prinzipiell zugelassen werden und würde die Kühlleistung der Kühleinrichtung nicht beeinträchtigen.

Besonders bevorzugt ist der Zulaufsammlerkanal und/oder der Ablaufsammlerkanal über ein quer zum Leerkanal ausgerichtetes weiteres Befestigungsmittel mit der Kühlplatte befestigt, wobei insbesondere das weitere Befestigungsmittel mit einem in Längsrichtung des Leerkanals eingesteckten weiteren Befestigungsaufnahme befestigt ist. Die Befestigung des Zulaufsammlerkanals und/oder des Ablaufsammlerkanal mit der Kühlplatte kann analog zu der Befestigung der Sammlerleiste mit der Kühlplatte erfolgen. Hierbei ist es möglich, dass die weitere Befestigungsaufnahme in Längsrichtung des Leerkanals eingesteckt ist und das weitere Befestigungsmittel über eine entsprechende Öffnung in der Kühlplatte quer zur Längsrichtung des Leerkanals in den Leerkanal hineinragt und mit der weiteren Befestigungsaufnahme zusammenwirkt. Zusätzlich oder alternativ kann eine abstehende Lasche des Zulaufsammlerkanals und/oder des Ablaufsammlerkanal flächig gegen die Stirnseite der Kühlplatte gedrückt sein, so dass das weitere Befestigungsmittel in Längsrichtung des Leerkanals ausgerichtet mit der quer zur Längsrichtung des Leerkanals über eine Öffnung eingesetzte weitere Befestigungsaufnahme zusammenwirken kann. Aufgrund der vergleichbaren Befestigungstechnik können kostengünstig identisch oder gleichartig ausgestaltete Bauteile verwendet werden.

Insbesondere ist vorgesehen, dass die Sammlerleiste in die stirnseitigen Öffnungen der Vorlaufkanäle und der Rücklaufkanäle eingesteckte Stopfen gegen die Kühlplatte presst, wobei insbesondere die Stopfen zu einer gemeinsamen Stopfenleiste einstückig zusammengefasst sind. Die, insbesondere durch Strangpressen herstellungsbedingt verbliebenen, Öffnungen an der zur Sammlerleiste weisenden ersten Stirnseite können verstopft sein, so dass über Öffnungen an der Oberseite und/oder an der Unterseite der Kühlplatte vorgesehene Öffnungen die fluidische Kommunikation mit dem jeweils zugeordneten Sammlerkanal erfolgen kann. Da die Sammlerleiste sowieso mit einer Befestigungskraft gegen die erste Stirnseite der Kühlplatte gepresst wird, kann diese Befestigungskraft gleichzeitig genutzt werden, um eine Abdichtung der Öffnungen zu erreichen. Hierbei ist nicht nur eine Abdeckung der Öffnungen, sondern auch ein Verstopfen vorgesehen, indem zumindest ein Teil des Materials des jeweiligen Stopfens in den zugeordneten Vorlaufkanal beziehungsweise Rücklaufkanal eingesteckt ist. Dadurch ergibt sich eine entsprechend hohe Dichtwirkung und bei der Montage eine Zentrierwirkung. Durch die einstückige Ausgestaltung der mehreren Stopfen in der Stopfenleiste ist die Bauteileanzahl gering gehalten. In der Stofenleiste können Öffnungen zur Durchfuhr des zur Befestigung der Sammlerleiste und/oder der Sammlerkanäle vorgesehenen Befestigungsmittels vorgesehen sein.

Vorzugsweise ist an einer von der Sammlerleiste weg weisenden zweiten Stirnseite der Kühlplatte eine Umkehrsammlerleiste zur fluidischen Verbindung jeweils eines Vorlaufkanals mit jeweils einem Rücklaufkanal befestigt ist, wobei in dem Leerkanal in Längsrichtung des Leerkanals eine bewegungsfest eingesetzte zweite Befestigungsaufnahme und ein in Längsrichtung des Leerkanals in den Leerkanal eingestecktes und mit der zweiten Befestigungsaufnahme befestigtes zweites Befestigungsmittel vorgesehen sind, wobei die Umkehrsammlerleiste mit Hilfe des mit der zweiten Befestigungsaufnahme zusammenwirkenden zweiten Befestigungsmittels befestigt ist. Die Befestigung der Sammlerleiste an der zweiten Stirnseite der Kühlplatte kann analog zur Befestigung der Sammlerleiste an der ersten Stirnseite der Kühlplatte erfolgen. Die Umkehrsammlerleiste kann mit Hilfe einer Befestigungsleiste mit der Kühlplatte befestigt sein. Hierbei kann die Befestigungsleiste analog zur Sammlerleiste mit der Kühlplatte befestigt sein und die Umkehrsammlerleiste an die zweite Stirnseite anpressen. Die Umkehrsammlerleiste kann insbesondere aus einem abdichtenden Material, insbesondere ein gummielastisches Material wie beispielsweise EPDM, hergestellt sein, so dass die fluidische Verbindung des Vorlaufkanals mit dem Rücklaufkanal und deren Abdichtung in einem gemeinsamen Bauteil erfolgen kann.

Die Funktionalisierung der insbesondere durch Strangpressen vorgesehene Leerkanäle für eine Befestigungstechnik mit anderen Bauteilen der Kühleinrichtung ermöglicht eine einfach herstellbare kostengünstige Kühleinrichtung für eine Kraftfahrzeugbatterie.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische perspektivische Explosionsansicht einer Vorderseite einer Kühleinrichtung für eine Kraftfahrzeugbatterie,
- Fig. 2:: eine schematische perspektivische Explosionsansicht einer Rückseite der Kühleinrichtung aus Fig. 1,
- Fig. 3:: eine schematische geschnittene Draufsicht einer Rückseite der Kühleinrichtung aus Fig. 2,
- Fig. 4:: eine schematische geschnittene Seitensicht einer Rückseite der Kühleinrichtung aus Fig. 2,
- Fig. 5:: eine schematische geschnittene Draufsicht einer Vorderseite der Kühleinrichtung aus Fig. 1,
- Fig. 6:: eine schematische geschnittene Draufsicht einer Vorderseite der Kühleinrichtung aus Fig. 1 und
- Fig. 7:: eine schematische perspektivische Ansicht einer Kühlplatte der Kühleinrichtung aus Fig. 1.

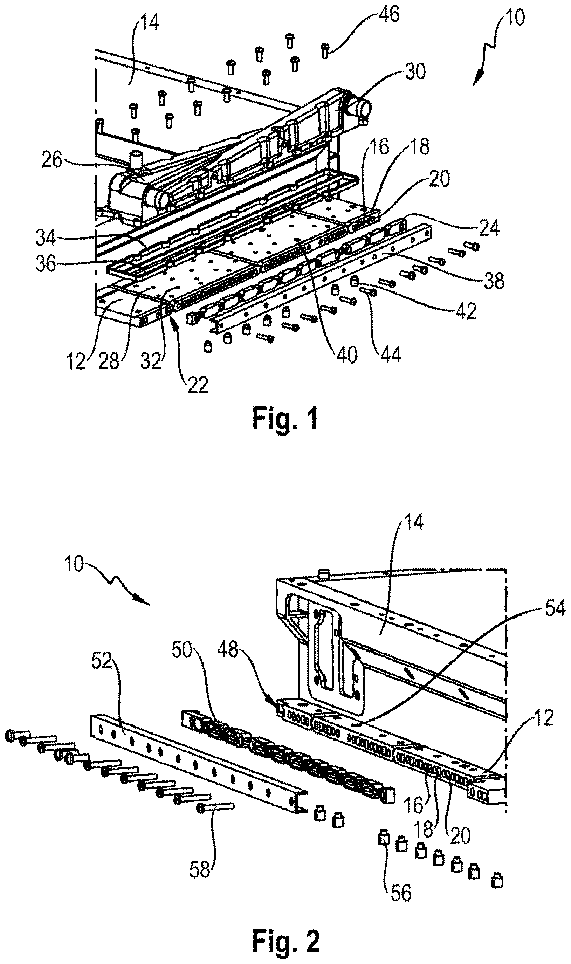

Die in Fig. 1 dargestellte Kühleinrichtung 10 weist eine Kühlplatte 12 auf, mit der ein Batterierahmen 14 eines Gehäuses zur Aufnahme von Batteriezellen einer Kraftfahrzeugbatterie verbunden werden kann. Die durch Strangpressen aus Aluminium oder einer Aluminiumlegierung hergestellte Kühlplatte 12 weist mehrere parallel zueinander verlaufende Kanäle auf, bei denen es sich um einen Vorlaufkanal 16 zur Zufuhr eines kalten Kühlmediums, einen Rücklaufkanal 18 zur Abfuhr des erwärmten Kühlmediums oder einen Leerkanal 20, in dem kein Kühlmedium geführt wird, handeln kann. An der dargestellten ersten Stirnseite 22 der Kühlplatte 12 sind die Öffnungen der Vorlaufkanäle 16 und der Rücklaufkanäle 18 von einer einstückigen Stopfenleiste 24 aus EPDM fluiddicht verstopft. An der Oberseite der Kühlplatte 12 weist der jeweilige Vorlaufkanal 16 eine mit einem gemeinsamen Zulaufsammlerkanal 26 kommunizierende Zulauföffnung 28 auf, während der jeweilige Rücklaufkanal 18 an der Oberseite der Kühlplatte 12 eine mit einem gemeinsamen Ablaufsammlerkanal 30 kommunizierende und zu den Zulauföffnung 28 in Längsrichtung versetzte Ablauföffnung 32 aufweist. Der Zulaufsammlerkanal 26 und der Ablaufsammlerkanal 30 sind als, insbesondere im Wesentlichen haubenförmiges, einstückiges Bauteil ausgestaltet. Zwischen dem Zulaufsammlerkanal 26 und der Kühlplatte 12 ist ein sämtliche Zulauföffnungen 28 umschließender erster Dichtring 34 vorgesehen, wobei zwischen dem Ablaufsammlerkanal 30 und der Kühlplatte 12 ein sämtliche Ablauföffnungen 32 umschließender zweiter Dichtring 36 vorgesehen ist. Der erste Dichtring 34 und der zweite Dichtring 36 können einstückig ausgestaltet sein, so dass beide Dichtringe 34, 36 sich ein gemeinsames Ringstück teilen können.

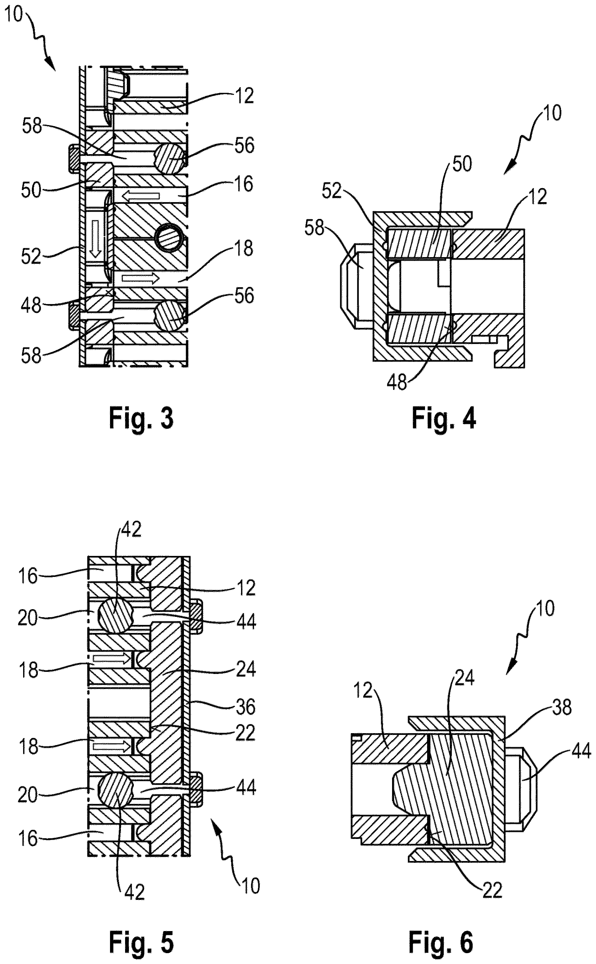

Die Stopfenleiste 24 kann von einer Sammlerleiste 38 gegen die erste Stirnseite 22 gepresst werden, um die Vorlaufkanäle 16 und die Rücklaufkanäle 18 stirnseitig abzudichten. Hierzu kann die Sammlerleiste 38 mit Hilfe der Leerkanäle 20 befestigt werden. Über eine in der Oberseite der Kühlplatte 12 vorgesehene Halteöffnung 40 ist eine Befestigungsaufnahme 42 in Längsrichtung des zugeordneten Leerkanals 20 bewegungsfest eingesetzte, indem ein Teil der Befestigungsaufnahme 42 in der Halteöffnung 40 verbleibt und formschlüssig an dem Rand der Halteöffnung 40 anschlagen kann. Die Befestigungsaufnahme 42 weist ein in Längsrichtung des Leerkanals 20 ausgerichtetes Innengewinde auf, in das ein als Schraube ausgestaltetes Befestigungsmittel 44 in Längsrichtung des Leerkanals 20 eingeschraubt werden kann. Dadurch wird die Sammlerleiste 38 an die erste Stirnseite 22 herangezogen und eine ausreichende Anpresskraft zum stirnseitigen Abdichten der Vorlaufkanäle 16 und der Rücklaufkanäle 18 auf die Stopfenleiste 24 aufgebracht, wie in Fig. 5 und Fig. 6 im Detail dargestellt ist.

Zur Befestigung des Zulaufsammlerkanals 26 und/oder des Ablaufsammlerkanals 30 kann eine analoge Befestigungstechnik verwendet werden, wobei hierbei ein quer zum Leerkanal 20 ausgerichtetes weiteres Befestigungsmittel 46 in eine in Längsrichtung des Leerkanals 20 eingesteckte weitere Befestigungsaufnahme eingeschraubt sein kann. Zusätzlich oder alternativ kann zumindest ein weiteres Befestigungsmittel 46 in ein in dem Material der Kühlplatte 12 eingebrachtes Innengewinde eingeschraubt sein.

In einer unabhängigen Erfindung kann, wie in Fig. 2 dargestellt, in analoger Weise an einer von der ersten Stirnseite 22 weg weisenden zweiten Stirnseite 48 eine aus EPDM hergestellte Umkehrsammlerleiste 50 mit der Kühlplatte 12 befestigt werden, indem eine Befestigungsleiste 52 die Umkehrsammlerleiste 50, welche jeweils einen Ausgang des Vorlaufkanals 16 mit einem Eingang des zugeordneten Rücklaufkanals 18 verbindet, gegen die zweite Stirnsite presst. Über eine zweite Halteöffnung 54 in der Oberseite der Kühlplatte 12 ist eine zweite Befestigungsaufnahme 56 formschlüssig in dem Leerkanal 20 eingesetzt und ein zweites Befestigungsmittel 58 in der zweiten Befestigungsaufnahme 56 eingeschraubt, um die Befestigungsleiste 52 mit der Kühlplatte 12 zu befestigen und die Umkehrsammlerleiste 50 mit einer ausreichenden Anpresskraft fluiddicht anzupressen, wie in Fig. 3 und Fig. 4 im Detail dargestellt ist.

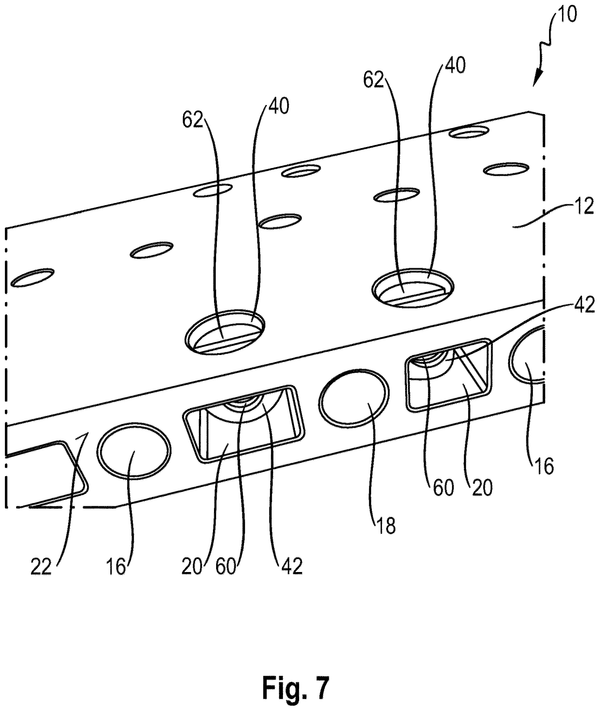

Wie in Fig. 7 dargestellt kann die Befestigungsaufnahme 42 und analog die weitere Befestigungsaufnahme und/oder die zweite Befestigungsaufnahme 56, ein in Längsrichtung des Leerkanals 20 ausgerichtetes Innengewinde 60 aufweisen, das mit Hilfe einer als Schraubendreherschlitz ausgestalteten Werkzeugkontur 62 durch eine Relativdrehung innerhalb der Halteöffnung 40 korrekt ausgerichtet werden kann.

## Patentansprüche

1. Kühleinrichtung für eine Kraftfahrzeugbatterie eines Kraftfahrzeugs, insbesondere elektrisch antreibbaren Kraftfahrzeugs,
mit einer Kühlplatte (12) zum Kühlen der Kraftfahrzeugbatterie,
wobei die Kühlplatte (12) Vorlaufkanäle (16) zur Zufuhr eines kalten Kühlmediums, zu den Vorlaufkanälen (16) parallel verlaufende Rücklaufkanäle (18) zur Abfuhr des erwärmten Kühlmediums und mindesten einen zu den Vorlaufkanälen (16) und den Rücklaufkanälen (18) parallel verlaufenen Leerkanal (20) aufweist,
mit einer an einer ersten Stirnstirnseite (22) der Kühlplatte (12) befestigten Sammlerleiste (38) zur Abdichtung von stirnseitigen Öffnungen der Vorlaufkanäle (16) und der Rücklaufkanäle (18),
mit einer in dem Leerkanal (20) eingesetzten und in Längsrichtung des Leerkanals (20) bewegungsfesten Befestigungsaufnahme (42),
mit einem in Längsrichtung des Leerkanals (20) in den Leerkanal (20) eingesteckten und mit der Befestigungsaufnahme (42) befestigten Befestigungsmittel (44),
wobei die Sammlerleiste (38) mit Hilfe des mit der Befestigungsaufnahme (42) zusammenwirkenden Befestigungsmittels (44) befestigt ist,
**dadurch gekennzeichnet, dass**
die Vorlaufkanäle (16) jeweils eine quer zur Längsrichtung des Vorlaufkanals (20) verlaufende Zulauföffnung (28) zur fluidischen Kommunikation mit einem an der Kühlplatte (12) aufgesetzten Zulaufsammlerkanal (26) und die Rücklaufkanäle (18) jeweils eine quer zur Längsrichtung des Rücklaufkanals (18) verlaufende Ablauföffnung (32) zur fluidischen Kommunikation mit einem an der Kühlplatte (12) aufgesetzten Ablaufsammlerkanal (30) aufweisen.

2. Kühleinrichtung nach Anspruch 1, **dadurch gekennzeichnet, dass** die Kühlplatte (12) eine mit dem Leerkanal (20) kommunizierende und quer zur Längsrichtung des Leerkanals (20) verlaufende Halteöffnung (40) zum in Längsrichtung des Leerkanals (20) bewegungsfesten Einsetzen der Befestigungsaufnahme (42) aufweist.

3. Kühleinrichtung nach Anspruch 2, **dadurch gekennzeichnet, dass** die Befestigungsaufnahme (42) ein in Längsrichtung des Leerkanals (20) ausgerichtetes Innengewinde (60) zum Einschrauben des Befestigungsmittels (44) aufweist, wobei die Befestigungsaufnahme (42) in der Halteöffnung (40) drehfest eingesetzt ist oder die Befestigungsaufnahme (42) in der Halteöffnung (40) drehbar eingesetzt ist und eine über die Halteöffnung (40) zugängliche Werkzeugkontur (62) zum Verdrehen der Befestigungsaufnahme (40) in der Halteöffnung (40) aufweist.

4. Kühleinrichtung nach einem der Ansprüche 1 bis 3, **dadurch kennzeichnet, dass** die Zulauföffnungen (28) einerseits und die Ablauföffnungen (32) andererseits in Längsrichtung zueinander versetzt angeordnet sind, wobei der Zulaufsammlerkanal (26) und der Ablaufsammlerkanal (30) in Längsrichtung zueinander versetzt ausgebildet sind, wobei insbesondere Zulaufsammlerkanal (26) und der Ablaufsammlerkanal (30) einstückig ausgestaltet sind.

5. Kühleinrichtung nach einem der Ansprüche 1 bis 4, **dadurch kennzeichnet, dass** zwischen dem Zulaufsammlerkanal (26) und der Kühlplatte (12) ein um alle Zulauföffnungen (28) gemeinsam herum verlaufender erster Dichtring (34) und zwischen dem Ablaufsammlerkanal (30) und der Kühlplatte (12) ein um alle Ablauföffnungen (32) gemeinsam herum verlaufender zweiter Dichtring (36) vorgesehen ist, wobei insbesondere der erste Dichtring (34) und der zweite Dichtring (36) einstückig ausgeführt sind.

6. Kühleinrichtung nach einem der Ansprüche 1 bis 5, **dadurch gekennzeichnet, dass** der Zulaufsammlerkanal (26) und/oder der Ablaufsammlerkanal (30) über ein quer zum Leerkanal (20) ausgerichtetes weiteres Befestigungsmittel (46) mit der Kühlplatte (12) befestigt ist, wobei insbesondere das weitere Befestigungsmittel (46) mit einem in Längsrichtung des Leerkanals (20) eingesteckten weiteren Befestigungsaufnahme befestigt ist.

7. Kühleinrichtung nach einem der Ansprüche 1 bis 6, **dadurch gekennzeichnet, dass** die Sammlerleiste (38) in die stirnseitigen Öffnungen der Vorlaufkanäle (16) und der Rücklaufkanäle (18) eingesteckte Stopfen gegen die Kühlplatte (12) presst, wobei insbesondere die Stopfen zu einer gemeinsamen Stopfenleiste (24) einstückig zusammengefasst sind.

8. Kühleinrichtung nach einem der Ansprüche 1 bis 7, **dadurch gekennzeichnet, dass** an einer von der Sammlerleiste (38) weg weisenden zweiten Stirnseite (48) der Kühlplatte (12) eine Umkehrsammlerleiste (50) zur fluidischen Verbindung jeweils eines Vorlaufkanals (16) mit jeweils einem Rücklaufkanal (18) befestigt ist, wobei in dem Leerkanal (20) in Längsrichtung des Leerkanals (20) eine bewegungsfest eingesetzte zweite Befestigungsaufnahme (56) und ein in Längsrichtung des Leerkanals (20) in den Leerkanal (20) eingestecktes und mit der zweiten Befestigungsaufnahme (56) befestigtes zweites Befestigungsmittel (58) vorgesehen sind, wobei die Umkehrsammlerleiste (50) mit Hilfe des mit der zweiten Befestigungsaufnahme (56) zusammenwirkenden zweiten Befestigungsmittels (58) befestigt ist.

## Claims

1. A cooling device for a motor-vehicle battery of a motor vehicle, in particular an electrically driveable motor vehicle,
having a cooling plate (12) for cooling the motor-vehicle battery,
wherein the cooling plate (12) has supply channels (16) for feeding of a cold cooling medium, return channels (18) for discharge of the heated cooling medium, which run parallel to the supply channels (16), and at least one empty channel (20), which runs parallel to the supply channels (16) and the return channels (18),
having a manifold strip (38) which is fastened to a first end face (22) of the cooling plate (12) and serves for sealing off end-face openings of the supply channels (16) and of the return channels (18),
having a fastening receptacle (42) which is inserted in the empty channel (20) and is fixed in terms of movement in the longitudinal direction of the empty channel (20),
having a fastening means (44) which is plugged into the empty channel (20), and is fastened to the fastening receptacle (42), in the longitudinal direction of the empty channel (20),
wherein the manifold strip (38) is fastened with the aid of the fastening means (44) that interacts with the fastening receptacle (42),
**characterized in that**
the supply channels (16) each have an inflow opening (28) which runs transversely to the longitudinal direction of the supply channel (20) and serves for fluidic communication with an inflow manifold channel (26) which is mounted on the cooling plate (12), and the return channels (18) each have an outflow opening (32) which runs transversely to the longitudinal direction of the return channel (18) and serves for fluidic communication with an outflow manifold channel (30) which is mounted on the cooling plate (12).

2. The cooling device as claimed in claim 1, **characterized in that** the cooling plate (12) has a holding opening (40) which communicates with the empty channel (20) and which runs transversely to the longitudinal direction of the empty channel (20) and which serves for insertion of the fastening receptacle (42) in a manner fixed in terms of movement in the longitudinal direction of the empty channel (20).

3. The cooling device as claimed in claim 2, **characterized in that** the fastening receptacle (42) has an internal thread (60) which is oriented in the longitudinal direction of the empty channel (20) and which serves for screwing-in of the fastening means (44), wherein the fastening receptacle (42) is inserted in the holding opening (40) in a rotationally fixed manner or the fastening receptacle (42) is inserted in the holding opening (40) in a rotatable manner and has a tool contour (62) which is accessible via the holding opening (40) and which serves for turning of the fastening receptacle (40) in the holding opening (40).

4. The cooling device as claimed in one of claims 1 to 3, **characterized in that** the inflow openings (28), at one side, and the outflow openings (32), at the other side, are arranged so as to be offset from one another in the longitudinal direction, wherein the inflow manifold channel (26) and the outflow manifold channel (30) are configured so as to be offset from one another in the longitudinal direction, wherein in particular the inflow manifold channel (26) and the outflow manifold channel (30) are formed integrally.

5. The cooling device as claimed in one of claims 1 to 4, **characterized in that** provision is made between the inflow manifold channel (26) and the cooling plate (12) of a first sealing ring (34) which runs around all the inflow openings (28) together, and between the outflow manifold channel (30) and the cooling plate (12) of a second sealing ring (36) which runs around all the outflow openings (32) together, wherein in particular the first sealing ring (34) and the second sealing ring (36) are formed integrally.

6. The cooling device as claimed in one of claims 1 to 5, **characterized in that** the inflow manifold channel (26) and/or the outflow manifold channel (30) are/is fastened to the cooling plate (12) via a further fastening means (46) which is oriented transversely to the empty channel (20), wherein in particular the further fastening means (46) is fastened to a further fastening receptacle which is plugged in in the longitudinal direction of the empty channel (20).

7. The cooling device as claimed in one of claims 1 to 6, **characterized in that** the manifold strip (38) presses against the cooling plate (12) plugs which are plugged into the end-face openings of the supply channels (16) and return channels (18), wherein in particular the plugs are combined integrally to form a common plug strip (24).

8. The cooling device as claimed in one of claims 1 to 7, **characterized in that** fastened to a second end face (48) of the cooling plate (12), which is directed away from the manifold strip (38), is a reversal manifold strip (50) for fluidic connection of in each case one supply channel (16) to in each case one return channel (18), wherein, in the empty channel (20), provision is made in the longitudinal direction of the empty channel (20) of a second fastening receptacle (56) which is inserted in a manner fixed in terms of movement, and of a second fastening means (58) which is plugged into the empty channel (20), and is fastened to the second fastening receptacle (56), in the longitudinal direction of the empty channel (20), wherein the reversal manifold strip (50) is fastened with the aid of the second fastening means (58) that interacts with the second fastening receptacle (56).

## Revendications

1. Dispositif de refroidissement pour une batterie de véhicule automobile d'un véhicule automobile, notamment d'un véhicule automobile à propulsion électrique,
avec une plaque de refroidissement (12) pour refroidir la batterie de véhicule automobile,
la plaque de refroidissement (12) présentant des canaux d'aller (16) pour amener un fluide de refroidissement froid, des canaux de retour (18) s'étendant parallèlement aux canaux d'aller (16) pour évacuer le milieu de refroidissement chauffé et au moins un canal vide (20) s'étendant parallèlement aux canaux d'aller (16) et aux canaux de retour (18),
avec une barre collectrice (38) fixée sur un premier côté frontal (22) de la plaque de refroidissement (12) pour l'étanchéité d'ouvertures frontales des canaux d'aller (16) et des canaux de retour (18),
avec un logement de fixation (42) inséré dans le canal vide (20) et fixe en mouvement dans la direction longitudinale du canal vide (20),
avec un moyen de fixation (44) inséré dans le canal vide (20) dans la direction longitudinale du canal vide (20) et fixé au logement de fixation (42),
la barre collectrice (38) étant fixée à l'aide du moyen de fixation (44) coopérant avec le logement de fixation (42),
**caractérisé en ce que**
les canaux d'aller (16) présentent respectivement une ouverture d'entrée (28) s'étendant transversalement à la direction longitudinale du canal d'aller (20) pour la communication fluidique avec un canal collecteur d'entrée (26) placé sur la plaque de refroidissement (12) et les canaux de retour (18) présentent respectivement une ouverture de sortie (32) s'étendant transversalement à la direction longitudinale du canal de retour (18) pour la communication fluidique avec un canal collecteur de sortie (30) placé sur la plaque de refroidissement (12).

2. Dispositif de refroidissement selon la revendication 1, **caractérisé en ce que** la plaque de refroidissement (12) présente une ouverture de retenue (40) communiquant avec le canal vide (20) et s'étendant transversalement à la direction longitudinale du canal vide (20) pour l'insertion du logement de fixation (42) de manière fixe en mouvement dans la direction longitudinale du canal vide (20).

3. Dispositif de refroidissement selon la revendication 2, **caractérisé en ce que** le logement de fixation (42) présente un filetage intérieur (60) orienté dans la direction longitudinale du canal vide (20) pour le vissage du moyen de fixation (44), le logement de fixation (42) étant inséré dans l'ouverture de retenue (40) de manière fixe en rotation ou le logement de fixation (42) étant inséré dans l'ouverture de retenue (40) de manière rotative et présentant un contour d'outil (62) accessible par l'intermédiaire de l'ouverture de retenue (40) pour la rotation du logement de fixation (40) dans l'ouverture de retenue (40).

4. Dispositif de refroidissement selon l'une quelconque des revendications 1 à 3, **caractérisé en ce que** les ouvertures d'entrée (28) d'une part et les ouvertures de sortie (32) d'autre part sont agencées en décalage les unes par rapport aux autres dans la direction longitudinale, le canal collecteur d'entrée (26) et le canal collecteur de sortie (30) étant réalisés en décalage l'un par rapport à l'autre dans la direction longitudinale, le canal collecteur d'entrée (26) et le canal collecteur de sortie (30) étant notamment conçus d'une seule pièce.

5. Dispositif de refroidissement selon l'une quelconque des revendications 1 à 4, **caractérisé en ce qu'**il est prévu entre le canal collecteur d'entrée (26) et la plaque de refroidissement (12) un premier joint d'étanchéité (34) s'étendant en commun autour de toutes les ouvertures d'entrée (28) et entre le canal collecteur de sortie (30) et la plaque de refroidissement (12) un deuxième joint d'étanchéité (36) s'étendant en commun autour de toutes les ouvertures de sortie (32), le premier joint d'étanchéité (34) et le deuxième joint d'étanchéité (36) étant notamment conçus d'une seule pièce.

6. Dispositif de refroidissement selon l'une quelconque des revendications 1 à 5, **caractérisé en ce que** le canal collecteur d'entrée (26) et/ou le canal collecteur de sortie (30) est fixé à la plaque de refroidissement (12) par l'intermédiaire d'un autre moyen de fixation (46) orienté transversalement au canal vide (20), l'autre moyen de fixation (46) étant notamment fixé par un autre logement de fixation enfiché dans la direction longitudinale du canal vide (20).

7. Dispositif de refroidissement selon l'une quelconque des revendications 1 à 6, **caractérisé en ce que** la barre collectrice (38) presse contre la plaque de refroidissement (12) des bouchons insérés dans les ouvertures frontales des canaux d'aller (16) et des canaux de retour (18), les bouchons étant notamment réunis en une barre de bouchons commune (24) d'une seule pièce.

8. Dispositif de refroidissement selon l'une quelconque des revendications 1 à 7, **caractérisé en ce que** sur un deuxième côté frontal (48) de la plaque de refroidissement (12), orienté à l'opposé de la barre collectrice (38), est fixée une barre collectrice d'inversion (50) pour la liaison fluidique respectivement d'un canal d'aller (16) avec respectivement un canal de retour (18), un deuxième logement de fixation (56) inséré de manière fixe en mouvement dans le canal vide (20) dans la direction longitudinale du canal vide (20) et un deuxième moyen de fixation (58) enfiché dans le canal vide (20) dans la direction longitudinale du canal vide (20) et fixé au deuxième logement de fixation (56) étant prévus, la barre collectrice d'inversion (50) étant fixée à l'aide du deuxième moyen de fixation (58) coopérant avec le deuxième logement de fixation (56).
